# FASCICULE DE BREVET EUROPEEN

(11) **EP 3 248 848 B1**
(45) Date de publication et mention de la délivrance du brevet: **21.08.2019**
(21) Numéro de dépôt: 17170969.4
(22) Date de dépôt: 15.05.2017
(51) Int. Cl.: B60S 1/38

(54) **DISPOSITIF DE FIXATION POUR LE MONTAGE D'UN BALAI D'ESSUIE-GLACE SUR UN BRAS D'ENTRAINEMENT, ET SYSTÈME D'ESSUYAGE CORRESPONDANT**
BEFESTIGUNGSVORRICHTUNG FÜR DIE MONTAGE EINES SCHEIBENWISCHERBLATTS AUF EINEM SCHEIBENWISCHERARM, UND ENTSPRECHENDES SCHEIBENWISCHSYSTEM
SECURING DEVICE FOR FITTING A WINDSCREEN WIPER ON A DRIVE ARM, AND CORRESPONDING WIPING SYSTEM

(30) Priorité: 27.05.2016 FR 1654769
(43) Date de publication de la demande: 29.11.2017
(73) Titulaire: Valeo Systèmes d'Essuyage, 78322 Le Mesnil Saint Denis (FR)
(72) Inventeur: MONEYRON, Patrick, 63500 ISSOIRE (FR); ALIBERTI, Claude, 63500 ISSOIRE (FR); TERRASSE, William, 63500 ISSOIRE (FR)
(74) Mandataire: Callu-Danseux, Violaine

(56) Documents cités:
- DE-A1- 10 122 764
- DE-A1-102010 052 315
- US-A1- 2016 075 308

## Description

La présente invention concerne un dispositif de fixation pour assembler un balai d'essuie-glace à un bras d'entrainement de véhicule automobile. L'invention concerne aussi un système d'essuyage comprenant un balai d'essuie-glace, un bras d'entrainement et un tel dispositif de fixation.

Les dispositifs de fixation permettent le raccordement de balais d'essuie-glace à des bras d'entrainement appropriés. Les dispositifs de fixation comprennent, d'une part, un connecteur assemblé au balai essuie-glace et au bras d'entrainement, et d'autre part, un capot destiné à être assemblé et verrouillé sur le connecteur. En conséquence, le dispositif de fixation comporte des moyens permettant le raccordement du bras d'entrainement sur le connecteur monté sur le balai d'essuie-glace, soit directement soit indirectement par l'intermédiaire d'un adaptateur, et des moyens d'assemblage et de verrouillage du capot sur le connecteur. On rappelle à cet égard qu'il existe différentes sortes de bras connus de l'état de la technique comme par exemple des bras crochets, des bras à axe de pivotement latéral, des bras à clipsage longitudinal, et autres. Il existe donc plusieurs types de dispositifs de fixation en fonction du style du bras et des directions à droite ou à gauche du véhicule. En outre, on connait par exemple du document DE10122764 un balai d'essuie-glace équipé d'un connecteur métallique serti sur des vertèbres de rigidification métalliques du balai et sur lequel un capot, comprenant une lamelle métallique, vient verrouiller le bras d'entrainement notamment en empêchant le retrait vertical de l'adaptateur reçu dans le connecteur. Cependant cette connexion métallique peut générer des difficultés au montage et démontage. En particulier, de l'oxydation peut apparaitre sur les différentes pièces entrainant une difficulté de verrouillage du balai d'essuie-glace au bras d'entrainement par l'intermédiaire du capot et du connecteur, de sorte que le balai d'essuie-glace peut être perdu en fonctionnement.

Le document DE 101 22 764 divulgue un dispositif de fixation pour le montage d'un balai d'essuie-glace d'un système d'essuyage de véhicule automobile sur un bras d'entrainement selon l'art antérieur.

Un des buts de la présente invention est de pallier au moins partiellement ces problèmes de l'état de la technique en proposant une alternative à moindre cout facilitant le montage et le démontage du dispositif de fixation sur le balai d'essuie-glace afin de raccorder et de verrouiller le bras d'entrainement au balai d'essuie-glace, et qui puisse être standardisée.

À cet effet, l'invention a pour objet un dispositif de fixation pour le montage d'un balai d'essuie-glace d'un système d'essuyage de véhicule automobile sur un bras d'entrainement, le dispositif de fixation comportant :
- un connecteur présentant une forme d'extension principale longitudinale et configuré pour être relié au balai d'essuie-glace d'une part et au bras d'entrainement d'autre part, et comportant :
   - au moins un premier moyen de coulissement par translation longitudinale et
   - au moins un premier moyen de verrouillage, et
- un capot présentant une forme d'extension principale longitudinale et configuré pour coopérer avec le connecteur de manière à fixer le balai d'essuie-glace au bras d'entrainement, et comportant :
   - au moins un deuxième moyen de coulissement complémentaire par translation longitudinale dudit au moins un premier moyen de coulissement, de manière à permettre l'assemblage du connecteur et du capot par coulissement, et
   - au moins un deuxième moyen de verrouillage complémentaire dudit au moins un premier moyen de verrouillage, de manière à permettre de verrouiller le capot et le connecteur.
Selon l'invention, les premiers moyens de coulissement et de verrouillage sont réalisés d'une seule pièce avec le connecteur, les deuxièmes moyens de coulissement et de verrouillage sont réalisés d'une seule pièce avec le capot, et ledit au moins un deuxième moyen de coulissement est distinct dudit au moins un deuxième moyen de verrouillage.

Ainsi, le capot, le connecteur et les premiers et deuxièmes moyens de coulissement et de verrouillage qu'ils portent respectivement, peuvent être réalisés de façon simple et à moindre cout. De plus, l'emplacement distinct pour le ou les moyens de coulissement et le ou les moyens de verrouillage, au moins du côté du capot, permet de fiabiliser le verrouillage. Le dispositif de fixation permet ainsi un montage et un démontage du balai d'essuie-glace sur le bras amélioré.

Selon une ou plusieurs caractéristiques du dispositif de fixation, prise seule ou en combinaison :
- ledit au moins un premier moyen de coulissement est distinct dudit au moins un premier moyen de verrouillage ;
- le connecteur et le capot sont réalisés dans des matériaux plastiques ;
- les premier et deuxième moyens de coulissement complémentaires sont respectivement portés par une partie supérieure du connecteur et par une partie supérieure du capot ;
- les premier et deuxième moyens de verrouillage complémentaires sont respectivement portés par des faces latérales opposées du connecteur, et par deux parois latérales opposées du capot en s'étendant à l'intérieur du capot ;
- les premier et deuxième moyens de verrouillage complémentaires comportent au moins un crochet et au moins une ouverture associée dans laquelle le crochet est configuré pour s'engager ;
- le capot comprend au moins deux pattes d'accrochage s'étendant longitudinalement et respectivement terminées par un crochet et le connecteur présente au moins deux ouvertures dans lesquelles les crochets sont configurés pour s'engager pour le verrouillage du capot au connecteur ;
- le capot comporte au moins un élément flexible portant ledit au moins un deuxième moyen de verrouillage et configuré pour se déformer de façon à permettre le verrouillage ou le déverrouillage du capot et du connecteur ;
- les parois latérales du capot sont au moins partiellement flexibles et portent des deuxièmes moyens de verrouillage ;
- le capot et le connecteur sont configurés pour coulisser l'un par rapport à l'autre selon un axe de coulissement, et les premier et deuxième moyens de coulissement complémentaires sont conformés de manière à empêcher un arrachement du capot et/ou du connecteur selon une direction perpendiculaire à l'axe de coulissement ;
- le capot et le connecteur présentent respectivement des formes d'extension principale longitudinale, et le capot et le connecteur sont configurés pour coulisser l'un par rapport à l'autre par translation longitudinale ;
- les premier et deuxième moyens de coulissement complémentaires comportent au moins une languette et au moins une rainure associée dans laquelle la languette est configurée pour coulisser ;
- le capot comprend au moins deux languettes s'étendant longitudinalement, et le connecteur comprend au moins deux rainures associées, de sorte qu'à l'assemblage, les languettes du capot coulissent par translation longitudinale dans les rainures du connecteur ;
- chaque languette présente une section sensiblement en « L » et le connecteur présente au moins deux contre-formes en « L » délimitant respectivement une rainure ;
- le capot présente une découpe pour le passage du balai d'essuie-glace de largeur supérieure à 6mm, de préférence de l'ordre de 9mm ;
- le dispositif de fixation comprend au moins un premier et au moins un deuxième moyens de maintien complémentaires portés respectivement par le connecteur et par le capot, les premier et deuxième moyens de maintien étant configurés pour maintenir le capot et le connecteur dans une position de livraison, sans coopération des premier et deuxième moyens de verrouillage, ladite position de livraison étant configurée pour permettre le montage du dispositif de fixation sur le balai d'essuie-glace et le bras d'entrainement avant fixation par coopération des premier et deuxième moyens de verrouillage ;
- les premier et deuxième moyens de maintien comportent au moins une butée et au moins une plaquette associée ;
- le capot comporte ladite au moins une plaquette et le connecteur comporte ladite au moins une butée ;
- ladite au moins une plaquette s'étend depuis une paroi supérieure du capot vers l'intérieur du capot, et ladite au moins une butée est agencée à la jonction entre une face supérieure et une face d'extrémité du connecteur ;
- ladite au moins une butée est agencée entre deux contre-formes sensiblement en « L » délimitant respectivement une rainure ;
- ladite au moins une plaquette présente une forme sensiblement en « U », comportant deux branches entre lesquelles la butée est agencée dans la position de livraison, de sorte que le déplacement du connecteur par rapport au capot selon l'axe de coulissement, est limité entre les deux branches du « U » de ladite au moins une plaquette ;
- ledit dispositif de fixation comprend un adaptateur pour la fixation au bras d'entrainement, le connecteur comporte un logement de réception de l'adaptateur, et ledit au moins un deuxième moyen de maintien porté par le capot est configuré pour immobiliser l'adaptateur selon une direction sensiblement perpendiculaire à l'axe de coulissement, dans la position verrouillée du capot et du connecteur ;
- le connecteur est symétrique ou asymétrique par rapport à un plan médian.

L'invention a aussi pour objet un système d'essuyage de véhicule automobile comportant au moins un balai d'essuie-glace, au moins un bras d'entrainement du balai d'essuie-glace, et un dispositif de fixation tel que décrit précédemment, fixant le balai d'essuie-glace au bras d'entrainement.

D'autres caractéristiques et avantages de l'invention apparaitront plus clairement à la lecture de la description suivante, donnée à titre d'exemple illustratif et non limitatif, et des figures annexées parmi lesquelles :
- la figure 1 est une vue en perspective d'un système d'essuyage,
- la figure 2 est une vue en éclaté du système d'essuyage de la figure 1,
- les figures 3a et 3b sont des vues montrant un connecteur et un capot, d'un dispositif de fixation du système d'essuyage des figures 1 et 2, assemblés l'un à l'autre,
- la figure 3c est une vue simplifiée du dispositif de fixation des figures 3a et 3b sur laquelle la partie supérieure du capot a été enlevée,
- la figure 3d est une vue de côté montrant le dispositif de fixation des figures 3a à 3c dans une position de livraison,
- les figures 4a à 4e sont différentes vues d'un connecteur selon un premier mode de réalisation,
- les figures 5a à 5c sont différentes vues d'un connecteur selon un deuxième mode de réalisation,
- les figures 6a et 6b sont des vues du dispositif de fixation dans une position assemblée,
- la figure 6c est une vue en perspective du dispositif de fixation dans une position de livraison,
- la figure 7 est une vue en coupe transversale montrant le dispositif de fixation assemblé à un balai d'essuyage et à un bras d'entrainement du système d'essuyage,
- les figures 8a à 8i sont différentes vues du capot,
- la figure 9 est une vue agrandie de moyens de maintien portés par le capot, et
- la figure 10 est une vue montrant les moyens de maintien portés par le capot en butée contre l'adaptateur reçu dans le connecteur.

Sur ces figures, les éléments identiques ou similaires sont identifiés par les mêmes numéros de référence.

Les réalisations suivantes sont des exemples. Bien que la description se réfère à un ou plusieurs modes de réalisation, ceci ne signifie pas nécessairement que chaque référence concerne le même mode de réalisation, ou que les caractéristiques s'appliquent uniquement à un seul mode de réalisation. De simples caractéristiques de différents modes de réalisation peuvent également être combinées ou interchangées pour fournir d'autres réalisations.

Dans la description, on peut indexer certains éléments, comme par exemple premier élément ou deuxième élément. Dans ce cas, il s'agit d'un simple indexage pour différencier et dénommer des éléments proches mais non identiques. Cette indexation n'implique pas une priorité d'un élément par rapport à un autre et on peut aisément interchanger de telles dénominations sans sortir du cadre de la présente description. Cette indexation n'implique pas non plus un ordre dans le temps.

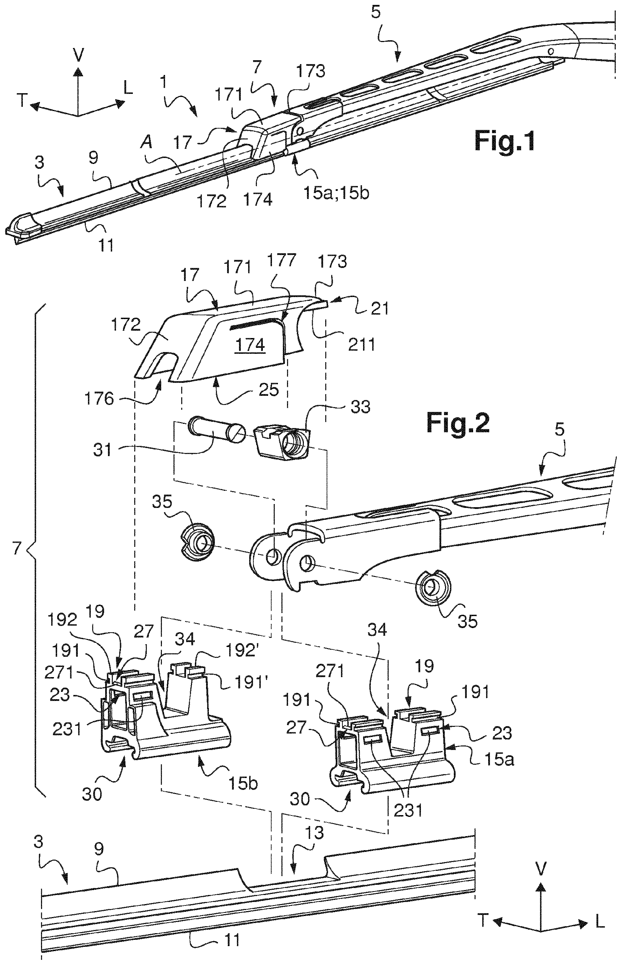

On a représenté sur la figure 1 une partie de système d'essuyage 1, notamment d'un mécanisme motorisé d'un véhicule automobile. Le système d'essuyage 1 comprend au moins un balai d'essuie-glace 3, au moins un bras d'entrainement 5 et un dispositif de fixation 7 destiné à assembler le balai d'essuie-glace 3 au bras d'entrainement 5.

Le balai d'essuie-glace 3 s'étend longitudinalement dans une direction L. Dans la suite de la description, on adoptera à titre non limitatif des directions longitudinale, verticale et transversale indiquées sur la figure 1 par le trièdre (L, V, T). Dans la suite de la description, les termes supérieur/inférieur, au-dessus/en-dessous sont désignés en référence à la disposition des éléments sur les figures selon la direction verticale V.

Le balai d'essuie-glace 3 comporte un déflecteur 9 sensiblement en forme d'aileron (ou spoiler en anglais) et une lame d'essuyage 11. Le déflecteur 9 et la lame d'essuyage 11 sont en matériau souple. Ils peuvent être obtenus par moulage ou extrusion d'un ou de plusieurs matériaux. Le balai d'essuie-glace 3 comprend généralement au moins une vertèbre de rigidification (appelée « spline » en anglais) non visible sur les figures. De plus, le déflecteur 9 peut présenter un logement 13 visible sur la figure 2, par exemple ici une forme découpée du déflecteur 9, pour recevoir un élément du dispositif de fixation 7.

Le dispositif de fixation 7 permet le montage et l'articulation du balai d'essuie-glace 3 sur l'extrémité libre du bras d'entraînement 5. Il comporte à cet effet un connecteur 15a ou 15b et un capot 17. Sur la figure 2, on a représenté un dispositif de fixation 7 pouvant comprendre deux types de connecteurs 15a et 15b dont les différences seront explicitées par la suite. Le connecteur 15a ou 15b sert d'interface avec le balai d'essuie-glace 3 et le bras d'entrainement 5, tandis que le capot 17 permet le verrouillage de l'ensemble. Le connecteur 15a ou 15b coopère donc avec le capot 17 pour maintenir et fixer le balai d'essuie-glace 3 sur le bras d'entrainement 5.

À cet effet, le dispositif de fixation 7 comprend un ou plusieurs premiers moyens de coulissement 19 portés par le connecteur 15a ou 15b et un ou plusieurs deuxièmes moyens de coulissement 21 portés par le capot 17 et complémentaires des premiers moyens de coulissement 19, de manière à permettre l'assemblage du connecteur 15a ou 15b et du capot 17.

Il s'agit par exemple de moyens par coopération de forme. À titre d'exemple, les premiers et deuxièmes moyens de coulissement 19, 21 complémentaires comportent au moins une languette 211 et au moins une rainure 191 associée dans laquelle la languette 211 est configurée pour coulisser, tel que cela sera décrit par la suite. Le capot 17 et le connecteur 15a ou 15b sont configurés pour coulisser l'un par rapport à l'autre selon un axe de coulissement *A* (figure 1). Selon l'invention, le coulissement se fait par translation longitudinale, de façon sensiblement parallèle à la direction longitudinale L. Les premiers et deuxièmes moyens de coulissement 19, 21 complémentaires sont avantageusement conformés de manière à empêcher un arrachement du capot 17 et/ou du connecteur 15a ou 15b selon une direction perpendiculaire à l'axe de coulissement A, ici selon la direction verticale V.

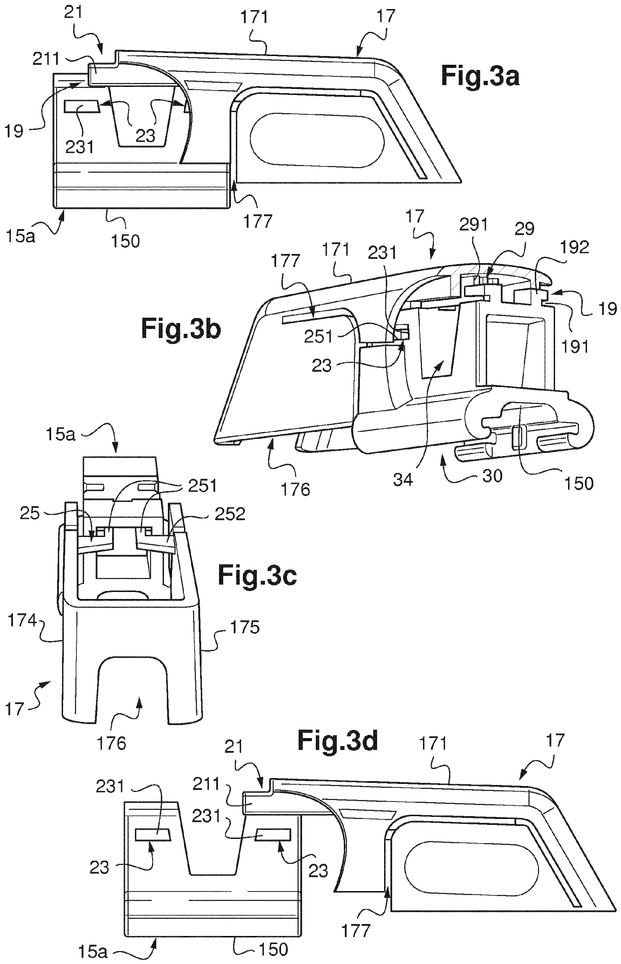

En outre, le dispositif de fixation 7 comprend un ou plusieurs premiers moyens de verrouillage 23 portés par le connecteur 15a ou 15b, et un ou plusieurs deuxièmes moyens de verrouillage 25 portés par le capot 17 et complémentaires des premiers moyens de verrouillage 23, pour verrouiller le capot 17 et le connecteur 15a ou 15b dans une position assemblée finale, comme cela est mieux visible sur les figures 3a à 3c. Les premiers et deuxièmes moyens de verrouillage 23, 25 sont configurés pour bloquer le mouvement longitudinal du connecteur 15a ou 15b par rapport au capot 17. Les premiers et deuxièmes moyens de verrouillage 23, 25 décrits plus en détail par la suite peuvent être des moyens par coopération de forme. Avantageusement, il s'agit de moyens de verrouillage 23, 25 permettant un verrouillage réversible du capot 17 et du connecteur 15a ou 15b. À titre d'exemple, les premiers et deuxièmes moyens de verrouillage 23, 25 complémentaires comportent au moins un crochet 251 (figure 3c) et au moins une ouverture 231 (figures 3a, 3b) associée dans laquelle le crochet 251 est configuré pour s'engager.

Le capot 17 et les deuxièmes moyens de coulissement 21 et de verrouillage 25 portés par le capot 17 sont réalisés de préférence d'une seule pièce. Du côté du capot 17, les deuxièmes moyens de coulissement 21 sont distincts des deuxièmes moyens de verrouillage 25.

De même, le connecteur 15a ou 15b et les premiers moyens de coulissement 19 et de verrouillage 23 portés par le connecteur 15a ou 15b sont réalisés de préférence d'une seule pièce. Avantageusement, du côté du connecteur 15a ou 15b, les premiers moyens de coulissement 19 sont également distincts des premiers moyens de verrouillage 23.

Par ailleurs, le dispositif de fixation 7 permet avantageusement un assemblage du connecteur 15a ou 15b au capot 17 dans une position dite de livraison, aussi appelée position ouverte ou encore position pré-montée, visible sur la figure 3d. Dans cette position de livraison, le capot 17 et le connecteur 15a ou 15b sont assemblés l'un à l'autre sans coopération des premiers et deuxièmes moyens de verrouillage 23, 25. Cette position de livraison permet le montage du dispositif de fixation 7 sur le balai d'essuie-glace 3 et le bras d'entrainement 5 avant fixation et verrouillage par coopération des premiers et deuxièmes moyens de verrouillage 23, 25. À cet effet, le dispositif de fixation 7 comprend au moins un premier moyen de maintien 27 (figure 2) porté par le connecteur 15a ou 15b et au moins un deuxième moyen de maintien 29 (figure 3b) porté par le capot 17 et complémentaire d'un premier de maintien 27 respectif. Ces premier(s) et deuxième(s) moyens de maintien 27, 29 sont configurés pour maintenir le capot 17 et le connecteur 15a ou 15b dans la position de livraison. À titre d'exemple, les premier(s) et deuxième(s) moyens de maintien 27, 29 comportent au moins une butée 271 (figure 2) et au moins une plaquette 291 (figure 3b) associée et conformée de manière à venir en appui contre la butée 271 dans la position de livraison (figure 3d).

Par ailleurs, le ou les premiers moyens de maintien 27 prévus sur le connecteur 15a ou 15b peuvent également être réalisés d'une seule pièce avec ce dernier. De même, le ou les deuxièmes moyens de maintien 29 prévus sur le capot 17 peuvent être réalisés d'une seule pièce avec ce dernier.

### Connecteur

En référence aux figures 2 et 4a à 5c, on décrit plus en détail le connecteur 15a ou 15b configuré pour être relié au capot 17 mais aussi au balai d'essuie-glace 3 et au bras d'entrainement 5. Le connecteur 15a ou 15b présente une forme d'extension principale longitudinale, autrement dit, il s'étend selon la direction longitudinale L.

Selon les exemples illustrés, le connecteur 15a ou 15b présente une face inférieure 150 configurée pour être reliée au balai d'essuie-glace 3 et une face supérieure 151 opposée configurée pour coopérer avec le capot 17. Les faces inférieure 150 et supérieure 151 sont reliées par deux faces d'extrémité opposées 152 et 153, et deux faces latérales opposées 154 et 155. Les faces d'extrémité 152 et 153 s'étendent ici selon un plan parallèle au plan V, T et les faces latérales opposées 154 et 155 s'étendent ici selon un plan parallèle au plan L, V. Les premiers moyens de coulissement 19 sont portés par la face supérieure 151 du connecteur 15a ou 15b. Les premiers moyens de verrouillage 23 sont portés par les faces latérales 154 et 155 opposées du connecteur 15a ou 15b.

De plus, selon les exemples décrits (voir figure 2), le connecteur 15a ou 15b est monté au niveau du logement 13 sur le déflecteur 9 du balai d'essuie-glace 3. Comme on peut le voir sur les figures 2, 4b, 4c et 5b, la face inférieure 150 du connecteur 15a ou 15b présente un canal de maintien 30 de la lame d'essuyage 11.

En se référant de nouveau à la figure 2, pour la fixation au bras d'entrainement 5, le dispositif de fixation 7 peut comprendre un axe 31, dans cet exemple un axe transversal, monté dans le connecteur 15a ou 15b et maintenu par le capot 17 à l'état assemblé. À l'état assemblé, l'axe transversal 31 s'étend selon la direction transversale T, perpendiculaire à la direction longitudinale L. Cet axe transversal 31 est configuré pour être relié, directement ou par l'intermédiaire d'un adaptateur 33 au bras d'entrainement 5.

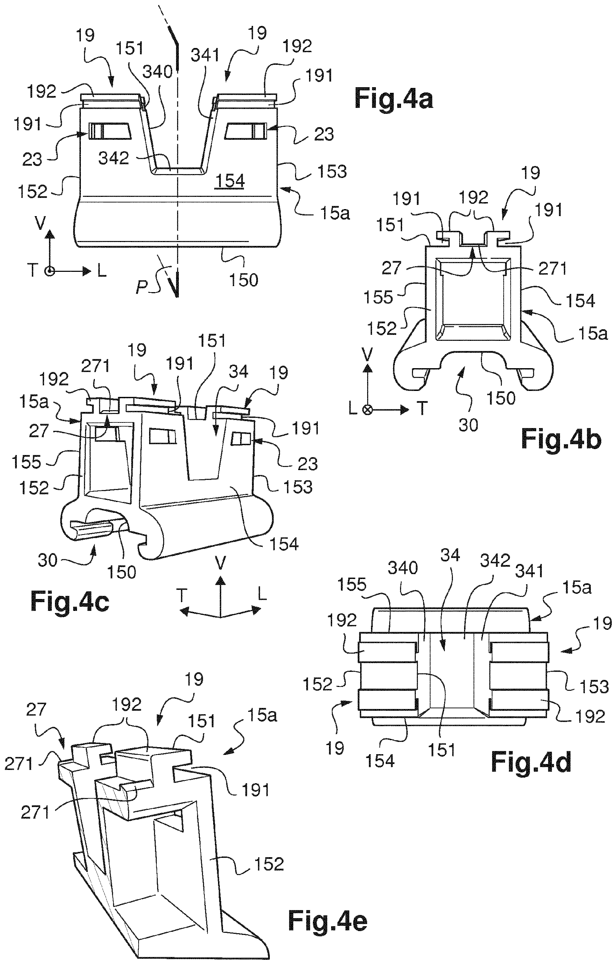

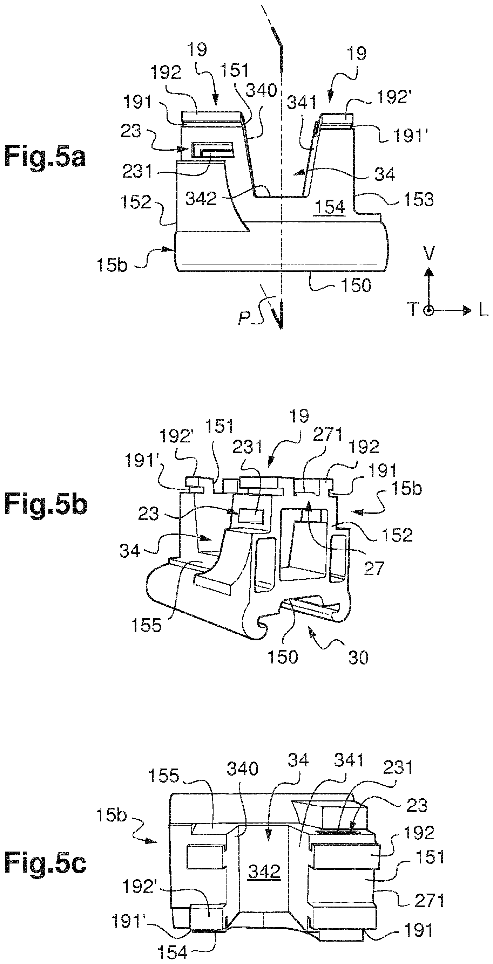

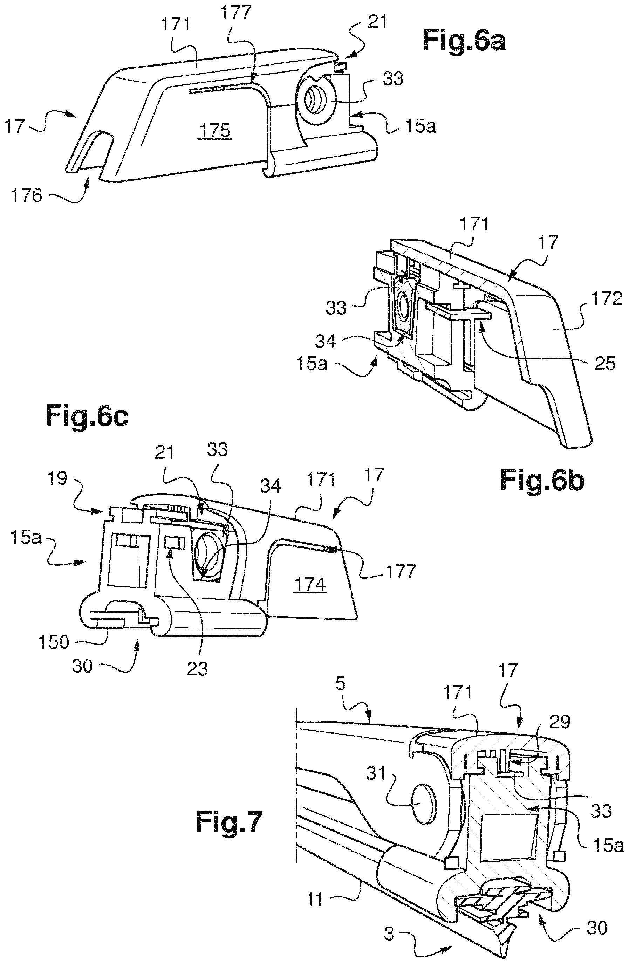

Dans le dernier cas, le connecteur 15a ou 15b peut comporter à cet effet un logement 34 de réception de l'adaptateur 33. Les figures 6a à 6c illustrent l'adaptateur 33 une fois monté dans le connecteur 15a selon un premier mode de réalisation décrit plus en détail par la suite et la figure 7 illustre ce connecteur 15a fixé sur l'extrémité du bras d'entrainement 5. Bien entendu, l'adaptateur 33 est monté de la même façon dans le connecteur 15b selon un deuxième mode de réalisation décrit par la suite. Des moyens ou organes de fixation, tels que des rondelles 35 (voir figure 2), peuvent être prévus pour la fixation de l'axe transversal 31 sur l'adaptateur 33. De plus, le logement 34 présente une forme complémentaire de la forme de l'adaptateur 33. Mieux visible sur les figures 4a, 4d et 5a, 5c, ce logement 34 est par exemple délimité par deux parois latérales 340, 341 reliées entre elles, à leurs extrémités inférieures, par une paroi de fond 342, du côté opposé à la face supérieure 151. Les parois 340, 341, 342 sont par exemple sensiblement planes. Les parois latérales 340, 341 sont, dans les exemples illustrés, inclinées par rapport au plan défini par la paroi de fond 342. Dans cet exemple les parois latérales 340, 341 ne sont pas parallèles et convergent vers la paroi de fond 342, de sorte que le logement 34 présente une section sensiblement en forme de « U » évasé ou en forme de trapèze isocèle dont l'une des bases a été enlevée. Le logement 34 est par exemple ménagé sensiblement au centre du connecteur 15a ou 15b selon la direction longitudinale L, en débouchant de part et d'autre sur les faces latérales 154 et 155. De plus, la paroi de fond 342 du logement 34 fait face à une ouverture pratiquée sur la face supérieure 151 du connecteur 15a séparant cette face supérieure 151 en deux parties.

### Premier mode de réalisation de connecteur 15a symétrique

Selon le premier mode de réalisation illustré sur les figures 4a à 4e, le connecteur 15a est symétrique par rapport à un plan P, dit plan médian, s'étendant selon les directions transversale T et verticale V et passant par le centre du connecteur 15a (voir figure 4a). Le connecteur symétrique 15a peut être assemblé dans n'importe quel sens sur le balai d'essuie-glace 3.

Les premiers moyens de coulissement 19 sont agencés sur une partie supérieure du connecteur 15a destinée à coopérer avec le capot 17. Plus précisément, ici les premiers moyens de coulissement 19 du connecteur 15a sont réalisés sur une partie supérieure de chaque face latérale 154, 155 du connecteur 15a. Selon le premier mode de réalisation particulier illustré, le connecteur 15a comprend au moins deux rainures 191 par face latérale 154, 155 respectivement associées et complémentaires d'une languette 211 du capot 17, de sorte qu'à l'assemblage du capot 17 au connecteur 15a, les languettes 211 du capot 17 coulissent par translation longitudinale dans les rainures 191 du connecteur 15a. En outre, les premiers moyens de coulissement 19 sont agencés de façon symétrique par rapport au plan P. Il en résulte que les premiers moyens de coulissement 19 sont prévus sur les faces latérales 154, 155 de part et d'autre du logement 34. Selon le premier mode de réalisation illustré, quatre rainures 191 distinctes sont donc ménagées sur les parties supérieures des faces latérales 154 et 155, deux rainures étant disposées sur chaque face latérale 154, 155.

Par ailleurs, dans cet exemple, le connecteur 15a présente des formes 192 délimitant respectivement une rainure 191. Ces formes 192 sont appelées contre-formes en rapport à leur complémentarité de formes par rapport aux languettes 211 du capot 17 détaillées par la suite. Ces contre-formes 192 sont sensiblement en « L », plus précisément en « L » inversé par rapport à la direction verticale V sur les figures 4a à 4c. Le connecteur 15a comporte autant de contre-formes 192 que de rainures 191. Selon le premier mode de réalisation, le connecteur 15a comporte quatre contre-formes 192, deux contre-formes 192 étant disposées sur chaque face latérale 154, 155, en « L » inversé sur la partie supérieure des faces latérales 154 et 155 et qui sont symétriques par rapport au plan P. La complémentarité de formes entre les contre-formes 192 et les languettes 211 du capot 17 permet de limiter le déplacement relatif, ici vertical, entre le connecteur 15a et le capot 17.

De plus, les premiers moyens de verrouillage 23 du connecteur 15a peuvent également être réalisés sur chaque face latérale 154, 155 du connecteur 15a. Les premiers moyens de verrouillage 23 peuvent être agencés sur une partie supérieure des faces latérales 154, 155 en dessous des premiers moyens de coulissement 19. Les premiers moyens de coulissement 19 et les premiers moyens de verrouillage 23 sont dans cet exemple prévus en des endroits distincts du connecteur 15a tout en étant réalisés d'une seule pièce avec le connecteur 15a. Selon le premier mode de réalisation particulier illustré, le connecteur 15a présente au moins deux ouvertures 231 respectivement associées et complémentaires d'un crochet 251 du capot 17, de sorte qu'à l'assemblage du capot 17 au connecteur 15a, les crochets 251 sont configurés pour s'engager respectivement dans les ouvertures 231 afin de bloquer le mouvement longitudinal du connecteur par rapport au capot. Les ouvertures 231 sont agencées sur les faces latérales 154, 155 du connecteur 15a. En outre, les premiers moyens de verrouillage 23 sont agencés de façon symétrique par rapport au plan P. Il en résulte que les premiers moyens de verrouillage 23 sont prévus sur les faces latérales 154, 155 de part et d'autre du logement 34. Selon le premier mode de réalisation illustré, quatre ouvertures 231 sont donc ménagées sur la partie supérieure des faces latérales 154 et 155, deux ouvertures 231 par face latérale 154 et 155. Chaque ouverture 231 est ménagée en-dessous d'une rainure 191. À titre d'exemple non limitatif, les ouvertures 231 peuvent être de section rectangulaire.

Enfin, les premiers moyens de maintien 27 du connecteur 15a peuvent comporter au moins une butée 271 (mieux visible sur la figure 4e) agencée à la jonction entre la face supérieure 151 et chaque face d'extrémité 152, 153, du connecteur 15a. Dans le premier mode de réalisation symétrique, le connecteur 15a comporte donc au moins deux butées 271 agencées de façon symétrique par rapport au plan P. Selon l'exemple illustré, chaque butée 271 est agencée de façon sensiblement centrale selon la direction transversale T. De plus, chaque butée 271 est agencée entre deux contre-formes 192 sensiblement en « L » inversé délimitant respectivement une rainure 191 (voir figures 4b, 4c et 4e).

### Deuxième mode de réalisation de connecteur 15b asymétrique

Un deuxième mode de réalisation est illustré sur les figures 5a à 5c. Seuls les éléments différents du premier mode de réalisation sont décrits ci-après. Selon ce deuxième mode de réalisation, le connecteur 15b est asymétrique par rapport au plan P, dit plan médian, s'étendant selon les directions transversale T et verticale V, et passant par le centre du connecteur 15b (voir figure 5a). Ce connecteur asymétrique 15b permet d'optimiser la consommation de matière. En fonction du sens de montage sur le balai d'essuie-glace 3, le connecteur asymétrique 15b peut être affecté soit à une direction à gauche soit à droite.

Ainsi, les premiers moyens de coulissement 19 du connecteur 15b selon le deuxième mode de réalisation ne sont pas agencés de façon symétrique sur les faces latérales 154, 155 de part et d'autre du logement 34. Des rainures 191, 191' peuvent être ménagées sur la partie supérieure des faces latérales 154 et 155, mais ces rainures 191, 191' sont de longueurs différentes de part et d'autre du logement 34. À titre d'exemple non limitatif, les rainures 191 sont plus longues sur un premier côté, à gauche du logement 34 en référence à l'orientation des éléments sur la figure 5a, et les rainures 191' sont plus courtes de l'autre côté du logement 34, à droite en référence à l'orientation sur la figure 5a. On prévoit de plus avantageusement un détrompeur pour le montage tel qu'une butée au niveau des rainures 191' plus courtes. Il va de soi que les contre-formes 192' délimitant les courtes rainures 191' sont également plus courtes que les contre-formes 192 délimitant les rainures 191 plus longues.

De même, les premiers moyens de verrouillage 23 ne sont plus agencés de façon symétrique par rapport au plan P. Les premiers moyens de verrouillage 23 peuvent être prévus sur chaque face latérale 154, 155 mais seulement sur un seul côté, à gauche en référence à l'orientation de la figure 5a, par rapport au logement 34. Selon l'exemple particulier illustré, de l'autre côté du logement 34, à droite en référence à la figure 5a, il n'y a pas de premiers moyens de verrouillage 23 prévus. Ainsi, les premiers moyens de verrouillage 23 comportent deux ouvertures 231 chacune étant ménagée sur une face latérale respective 154 ou 155 du connecteur 15b, d'un seul côté par rapport au logement 34. Dans cet exemple, les ouvertures 231 sont respectivement agencées en-dessous d'une rainure 191 plus longue.

Enfin, le premier moyen de maintien 27 est par exemple réalisé par au moins une butée 271 prévue d'un seul côté du connecteur 15b. La ou chaque butée 271 est par exemple agencée à la jonction entre la face supérieure 151 et une seule face d'extrémité 152 ou 153, ici la face d'extrémité 152 qui se trouve du côté où les premiers moyens de coulissement 19 et les premiers moyens de verrouillage 23 sont prévus.

Le reste de la description en référence au premier mode de réalisation illustré sur les figures 4a à 4e s'applique au deuxième mode de réalisation.

### Capot

En référence aux figures 1, 2 et 8a à 8i, on décrit plus en détail le capot 17. Avantageusement, le capot 17 est réalisé dans un matériau plastique. Comme on peut le voir sur les figures 1 et 2, le capot 17 est destiné à se fixer sur le connecteur 15a ou 15b du côté opposé au côté assemblé sur la lame d'essuyage 11 présentant notamment le logement 30.

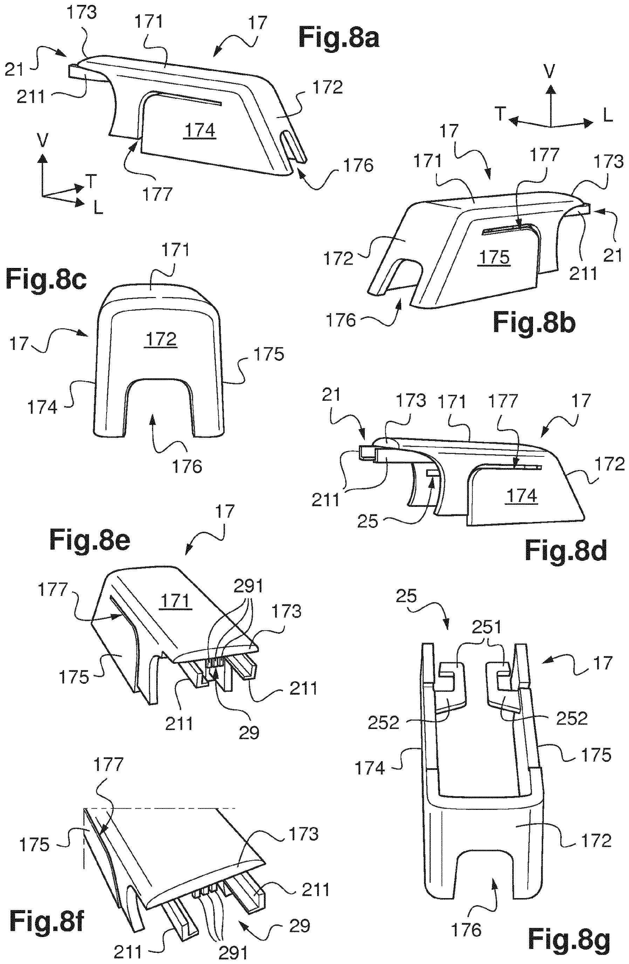

En référence aux figures 8a et 8b, le capot 17 présente une forme d'extension principale longitudinale, et s'étend donc selon la direction longitudinale L.

Le capot 17 présente par exemple une forme ouverte avec une paroi supérieure 171 reliant une paroi avant 172 et une paroi arrière 173 opposées, et deux parois latérales 174, 175 opposées. Les parois avant 172 et arrière 173 s'étendent ici selon un plan parallèle au plan V, T et les parois latérales 174, 175 s'étendent ici selon un plan parallèle au plan L, V. Dans cet exemple aucune paroi n'est agencée en regard de la paroi supérieure 171, conférant la « forme ouverte », c'est-à-dire qui n'est pas fermée de tous les côtés.

La paroi avant 172 est par exemple conformée pour permettre le montage sur le balai d'essuie-glace 3 et comporte, plus précisément, une découpe 176 pour le passage du déflecteur 9 (voir figures 1 et 2). La découpe 176 est mieux visible sur la figure 8c. Cette découpe 176 est ménagée de façon sensiblement centrale sur la paroi avant 172 selon la direction transversale T. De plus, la découpe 176 est prévue suffisamment large pour permettre de s'affranchir du sens du déflecteur 9 (ou spoiler) selon la direction à droite ou à gauche. À titre d'exemple non limitatif, on peut prévoir une découpe 176 avec une largeur supérieure à 6mm, par exemple de l'ordre de 9mm, dans la direction transversale T. La découpe 176 peut par exemple présenter une largeur de l'ordre de la moitié de la largeur totale de la paroi avant 172. Une telle découpe 176 contribue à standardiser le capot 17 qui peut s'adapter à différents véhicules tant au niveau du style de balais et bras que du type de direction.

La paroi arrière 173 est quant à elle configurée pour être agencée du côté du bras d'entrainement 5 (voir figures 1 et 2). À l'état assemblé du capot 17 et du connecteur 15a ou 15b, la paroi supérieure 171 est agencée en regard de la face supérieure 151 du connecteur 15a ou 15b, la paroi avant 172 est agencée en regard d'une paroi d'extrémité 152 du connecteur 15a ou 15b, la paroi arrière 173 est agencée en regard de l'autre paroi d'extrémité 153 du connecteur 15a ou 15b, et chaque paroi latérale 174, 175 du capot 17 est agencée en regard d'une face latérale 154, 155 du connecteur 15a ou 15b.

Les deuxièmes moyens de coulissement 21 du capot 17 sont dans cet exemple portés par une partie supérieure du capot 17, ici par la paroi supérieure 171. Plus précisément, les deuxièmes moyens de coulissement 21 sont agencés sur la paroi supérieure 171 du côté intérieur du capot 17, c'est-à-dire du côté de la paroi supérieure 171 à partir duquel s'étendent les parois latérales 174, 175, le côté intérieur étant destiné à faire face au connecteur 15a ou 15b à l'assemblage. Selon le mode de réalisation illustré, les deuxièmes moyens de coulissement 21 comportent au moins une languette 211 s'étendant par exemple sensiblement longitudinalement. Dans cet exemple, les deuxièmes moyens de coulissement 21 du capot 17 comportent deux languettes longitudinales 211, mieux visibles sur les figures 8d à 8f, configurées pour coopérer aussi bien avec les rainures 191 du connecteur symétrique 15a que les rainures 191, 191' du connecteur asymétrique 15b. Les languettes 211 s'étendent ici depuis la paroi supérieure 171, du côté intérieur du capot 17 et en faisant saillie par rapport à la paroi arrière 173. En outre, selon l'exemple illustré, chaque languette 211 présente une section sensiblement en « L » complémentaire des contre-formes 192 ; 192' délimitant les rainures 191 ; 191' du connecteur 15a ou 15b. Ainsi, le capot 17 comporte deux languettes 211 qui viennent rentrer dans les rainures 191 ; 191' présentes sur le connecteur 15a ou 15b tout en passant au-dessus de l'adaptateur 33. Le bras d'entrainement 5 fixé à l'adaptateur 33 est donc maintenu à l'arrachement dans la direction verticale V par le capot 17 et notamment ses languettes 211, qui verrouillent l'adaptateur 33 en l'empêchant de sortir par le haut. Le capot 17 exerce donc une résistance à une force verticale grâce à la présence des deux languettes 211 prises dans les rainures 191 ; 191' présentes sur le connecteur 15a ou 15b.

Avantageusement, le capot 17 comporte au moins un élément flexible ou souple. Selon le mode de réalisation décrit, les parois latérales 174, 175 du capot 17 sont au moins partiellement flexibles. À cet effet, on peut prévoir une fente 177 sur chaque paroi latérale 174, 175. Le capot 17 forme alors un organe de préhension configuré pour se déformer de manière réversible, sous l'action d'un effort extérieur, ici lorsqu'un utilisateur appuie sur les parois latérales 174, 175 du capot 17.

Les deuxièmes moyens de verrouillage 25 sont portés par les deux parois latérales 174, 175 opposées du capot 17, plus précisément ici sur une partie supérieure des parois latérales 174, 175 et en-dessous des deuxièmes moyens de coulissement 21. Les deuxièmes moyens de coulissement 21 et les deuxièmes moyens de verrouillage 25 sont donc prévus en des endroits distincts du capot 17 tout en étant réalisés d'une seule pièce avec le capot 17. Les parois latérales 174, 175 au moins partiellement flexibles et qui portent les deuxièmes moyens de verrouillage 25 sont configurées pour se déformer de façon à permettre le verrouillage ou le déverrouillage du capot 17 et du connecteur 15a ou 15b. On pourrait prévoir en variante que le connecteur 15a ou 15b comporte un tel élément flexible portant les premiers moyens de verrouillage 23.

Selon l'exemple illustré sur la figure 8g, le capot 17 comporte au moins une patte d'accrochage 252, ici au moins deux pattes d'accrochage 252, chacune faisant saillie d'une paroi latérale 174, 175. Chaque patte d'accrochage 252 s'étend depuis la paroi latérale 174, respectivement 175, à l'intérieur du capot 17 et dans une direction sensiblement perpendiculaire à la face latérale 174, respectivement 175. Chaque patte d'accrochage 252 est recourbée de façon à former à son extrémité libre un crochet 251 configuré pour s'insérer dans une ouverture 231 complémentaire du connecteur 15a ou 15b. Chaque crochet 251 est agencé sensiblement à hauteur de l'ouverture 231 correspondante pour s'accrocher sur le connecteur 15a ou 15b à l'état assemblé. Une fois les crochets 251 engagés dans les ouvertures 231 associées, cela permet de limiter le déplacement longitudinal relatif entre le connecteur 15a ou 15b et le capot 17, et donc d'empêcher l'arrachement longitudinal.

Les parois latérales 174, 175 au moins partiellement flexibles sont avantageusement configurées pour être rapprochées l'une de l'autre, sous l'action d'un effort extérieur, de façon à permettre le verrouillage ou le déverrouillage du capot 17 et du connecteur 15a ou 15b. Autrement dit, en appuyant sur les parois latérales 174, 175 cela permet :
- l'engagement des crochets 251 dans les ouvertures 231 du connecteur 15a ou 15b pour le verrouillage ou
- le désengagement des crochets 251 des ouvertures 231 pour le déverrouillage.

Ainsi, le capot 17 comporte deux parois flexibles, ici les parois latérales 174, 175, qui supportent à l'intérieur deux crochets 251 qui viennent se fixer, une fois le capot 17 et le connecteur 15a ou 15 assemblés, dans les ouvertures 231 du connecteur 15a ou 15b prévues à cet effet. Pour libérer les crochets 251, il suffit d'appuyer sur les deux parois latérales 174, 175 et ainsi les faire sortir des ouvertures 231. Aucun outil n'est nécessaire ni pour le verrouillage ni pour le déverrouillage. De plus, les crochets 251 s'étendant à l'intérieur du capot 17, il est très simple de les désengager des ouvertures 231 en appuyant sur le capot 17.

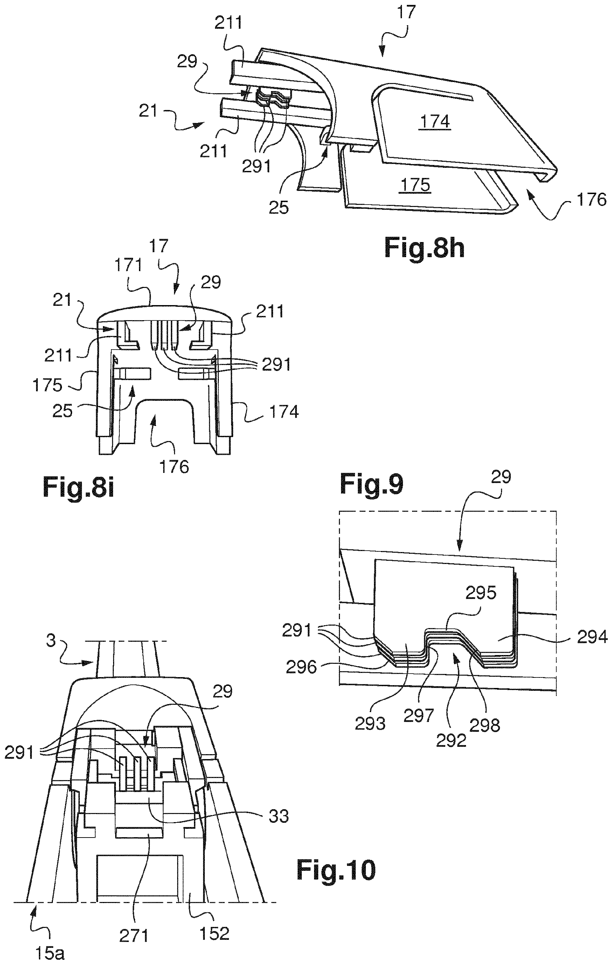

Enfin, en référence aux figures 8h et 8i, le ou les deuxièmes moyens de maintien 29 portés par le capot 17 sont agencés sur la paroi supérieure 171 du capot 17, du côté intérieur du capot 17 destiné à faire face au connecteur 15a ou 15b. À titre d'exemple, le capot 17 comporte au moins une plaquette 291 formant un deuxième moyen de maintien 29, s'étendant de façon sensiblement perpendiculaire à la paroi supérieure 171 vers l'intérieur du capot 17. Avantageusement, le capot 17 comporte au moins deux plaquettes 291 parallèles entre elles, trois dans l'exemple illustré. La ou chaque plaquette 291 est conformée pour coopérer avec une ou plusieurs butées 271 du connecteur 15a ou 15b. Selon l'exemple illustré sur la figure 9, la ou chaque plaquette 291 présente une encoche 292. Cette encoche 292 confère ici à la plaquette 291 une forme sensiblement en « U », avec une première branche 293 et une deuxième branche 294 reliées par une base 295. Dans la position de livraison, la ou les butées 271 se trouvent au niveau de l'encoche 292, entre les deux branches 293, 294 des plaquettes 291. Ainsi, le déplacement du connecteur 15a ou 15b par rapport au capot 17 est limité par les deux branches 293, 294 de la ou des plaquettes 291 selon l'axe de coulissement A, ici dans la direction longitudinale L. La taille de l'encoche 292, ou autrement dit l'espacement entre les deux branches 293, 294 peut être prévu de sorte que, dans la position de livraison, il y ait du jeu entre une butée 271 et les branches 293 et 294. Par ailleurs, la première branche 293 présente un bord d'attaque 296 configuré pour être le premier bord en contact avec au moins une butée 271 lors de l'assemblage du capot 17 au connecteur 15a ou 15b. Ce bord d'attaque 296 peut être un biseau afin de faciliter le passage de la butée 271 vers l'encoche 292 entre les deux branches 293 et 294. La première branche 293 peut présenter un bord de fuite 297 sensiblement droit. La deuxième branche 294 peut quant à elle présenter un bord d'attaque 298 incliné par rapport à la base 295, par exemple ici avec la même inclinaison que le biseau 296 de la première branche 293 afin de faciliter la continuation du mouvement de coulissement de la ou des butées 271 hors de l'encoche 292.

En outre, en se référant à la figure 10, le ou les deuxièmes moyens de maintien 29 peuvent en complément être configurés pour coopérer avec l'adaptateur 33, en venant ici appuyer sur l'adaptateur 33, dans la position assemblée finale du capot 17 et du connecteur 15a ou 15b, de façon à immobiliser l'adaptateur 33 selon une direction sensiblement perpendiculaire à l'axe de coulissement A, ici selon la direction verticale V. Les languettes 291 assurent alors deux fonctions. La première est de maintenir le capot 17 sur le connecteur 15a ou 15b en position ouverte, afin que le consommateur final possède un balai d'essuie-glace 3 prêt à monter sans pièce à ajouter. La deuxième est de venir appuyer sur l'adaptateur 33 et le mettre en contrainte pour bien maintenir celui-ci dans le connecteur 15a ou 15b.

Ainsi, les languettes 211 du capot 17 peuvent être insérées dans les rainures 191 correspondantes du connecteur 15a ou 15b jusqu'à la position de livraison, c'est-à-dire lorsque les premier et deuxième moyens de maintien 27, 29 coopèrent. L'utilisateur final peut alors utiliser le dispositif de fixation 7 fixé sur le balai d'essuie-glace 3, le relier au bras d'entrainement 5 notamment par l'intermédiaire de l'adaptateur 33 et continuer le mouvement de coulissement. Les crochets 251 du capot 17 s'insèrent dans les ouvertures 231 sur les faces latérales 154, 155 du connecteur 15a ou 15b limitant ainsi le déplacement longitudinal relatif entre le connecteur 15a ou 15b et le capot 17. Les languettes 211 du capot 17 passent au-dessus de l'adaptateur 33 empêchant ainsi un arrachement vertical et en complément les plaquettes 291 du capot 17 viennent avantageusement appuyer sur l'adaptateur 33.

Le dispositif de fixation 7 est avantageusement tout en plastique et peut être réalisé de façon simple à moindre cout tout en garantissant une connexion et un verrouillage fiable et robuste. Du côté du capot 17, les deuxièmes moyens de coulissement 21 et de verrouillage 25, voire de maintien 29, sont réalisés en une seule pièce plastique avec le capot 17 tout en étant en différents endroits du capot 17. On facilite ainsi la réalisation de la pièce et cela améliore le montage et le démontage sur le connecteur 15a ou 15b. De plus, le capot 17 est adapté aussi bien aux véhicules direction à gauche qu'à droite, ce qui permet de réduire le nombre de capots au stade de la production. De façon complémentaire, du côté du connecteur 15a ou 15b, les premiers moyens de coulissement 19 et de verrouillage 23, voire de maintien 27, sont réalisés en une seule pièce plastique avec le connecteur 15a ou 15b tout en étant en différents endroits du connecteur 15a ou 15b.

## Revendications

1. Dispositif de fixation (7) pour le montage d'un balai d'essuie-glace (3) d'un système d'essuyage (1) de véhicule automobile sur un bras d'entrainement (5), le dispositif de fixation (7) comportant :
- un connecteur (15a ; 15b) présentant une forme d'extension principale longitudinale et configuré pour être relié au balai d'essuie-glace (3) d'une part et au bras d'entrainement (5) d'autre part, et comportant :
• au moins un premier moyen de coulissement (19) par translation longitudinale et
• au moins un premier moyen de verrouillage (23), et
- un capot (17) présentant une forme d'extension principale longitudinale et configuré pour coopérer avec le connecteur (15a ; 15b) de manière à fixer le balai d'essuie-glace (3) au bras d'entrainement (5), et comportant :
• au moins un deuxième moyen de coulissement (21) par translation longitudinale complémentaire dudit au moins un premier moyen de coulissement (19), et
• au moins un deuxième moyen de verrouillage (25) complémentaire dudit au moins un premier moyen de verrouillage (23),
**caractérisé en ce que** :
- les premiers moyens de coulissement (19) et de verrouillage (23) sont réalisés d'une seule pièce avec le connecteur (15a ; 15b), **en ce que**
- les deuxièmes moyens de coulissement (21) et de verrouillage (25) sont réalisés d'une seule pièce avec le capot (17), et **en ce que**
- ledit au moins un deuxième moyen de coulissement (21) est distinct dudit au moins un deuxième moyen de verrouillage (25).

2. Dispositif de fixation (7) selon la revendication précédente, dans lequel le connecteur (15a; 15b) et le capot (17) sont réalisés dans des matériaux plastiques.

3. Dispositif de fixation (7) selon l'une des revendications précédentes, dans lequel :
- les premier et deuxième moyens de coulissement complémentaires (19, 21) sont respectivement portés par une partie supérieure du connecteur (15a ; 15b) et par une partie supérieure du capot (17), et dans lequel
- les premier et deuxième moyens de verrouillage complémentaires (23, 25) sont respectivement portés par des faces latérales (154, 155) opposées du connecteur (15a ; 15b), et par deux parois latérales (174, 175) opposées du capot (17) en s'étendant à l'intérieur du capot (17).

4. Dispositif de fixation (7) selon l'une quelconque des revendications précédentes, dans lequel les premier et deuxième moyens de verrouillage complémentaires (23, 25) comportent au moins un crochet (251) et au moins une ouverture associée (231) dans laquelle le crochet (251) est configuré pour s'engager.

5. Dispositif de fixation (7) selon la revendication précédente, dans lequel :
- le capot (17) comprend au moins deux pattes d'accrochage (252) s'étendant longitudinalement et respectivement terminées par un crochet (251), et
- le connecteur (15a ; 15b) présente au moins deux ouvertures (231) dans lesquelles les crochets (251) sont configurés pour s'engager pour le verrouillage du capot (17) au connecteur (15a ; 15b).

6. Dispositif de fixation (7) selon l'une quelconque des revendications précédentes, dans lequel le capot (17) comporte au moins un élément flexible portant ledit au moins un deuxième moyen de verrouillage (23 ; 25) et configuré pour se déformer de façon à permettre le verrouillage ou le déverrouillage du capot (17) et du connecteur (15a ; 15b).

7. Dispositif de fixation (7) selon l'une quelconque des revendications précédentes, dans lequel le capot (17) et le connecteur (15a ; 15b) sont configurés pour coulisser l'un par rapport à l'autre selon un axe de coulissement (*A*), et dans lequel les premier et deuxième moyens de coulissement complémentaires (19, 21) sont conformés de manière à empêcher un arrachement du capot (17) et/ou du connecteur (15a ; 15b) selon une direction perpendiculaire à l'axe de coulissement (A).

8. Dispositif de fixation (7) selon l'une quelconque des revendications précédentes, dans lequel les premier et deuxième moyens de coulissement complémentaires (19, 21) comportent au moins une languette (211) et au moins une rainure (191) associée dans laquelle la languette (211) est configurée pour coulisser.

9. Dispositif de fixation (7) selon la revendication précédente, dans lequel :
- le capot (17) comprend au moins deux languettes (211) s'étendant longitudinalement, et
- le connecteur (15a ; 15b) comprend au moins deux rainures (191) associées, de sorte qu'à l'assemblage, les languettes (211) du capot (17) coulissent par translation longitudinale dans les rainures (191) du connecteur (15a ; 15b).

10. Dispositif de fixation (7) selon l'une quelconque des revendications précédentes, dans lequel le capot (17) présente une découpe (176) pour le passage du balai d'essuie-glace (3), ladite découpe possédant de préférence une largeur supérieure à 6mm, plus particulièrement de l'ordre de 9mm.

11. Dispositif de fixation (7) selon l'une quelconque des revendications précédentes,
- comprenant au moins un premier (27) et au moins un deuxième (29) moyens de maintien complémentaires portés respectivement par le connecteur (15a ; 15b) et par le capot (17),
- les premier et deuxième moyens de maintien (27, 29) étant configurés pour maintenir le capot (17) et le connecteur (15a ; 15b) dans une position de livraison, sans coopération des premier et deuxième moyens de verrouillage (23, 25).

12. Dispositif de fixation (7) selon la revendication précédente, dans lequel les premier et deuxième moyens de maintien (27, 29) comportent au moins une butée (271) et au moins une plaquette associée (291).

13. Dispositif de fixation (7) selon la revendication précédente, dans lequel
- ladite au moins une plaquette (291) s'étend depuis une paroi supérieure (171) du capot (17) vers l'intérieur du capot (17), et dans lequel
- ladite au moins une butée (271) est agencée à la jonction entre une face supérieure (151) et une face d'extrémité (152, 153) du connecteur (15a ; 15b).

14. Dispositif de fixation (7) selon l'une des revendications 12 ou 13, dans lequel ladite au moins une plaquette (291) présente une forme sensiblement en « U », comportant deux branches (293, 294) entre lesquelles la butée (271) est agencée dans la position de livraison, de sorte que le déplacement du connecteur (15a ; 15b) par rapport au capot (17) selon l'axe de coulissement (A), est limité entre les deux branches (293, 294) du « U » de ladite au moins une plaquette (291).

15. Dispositif de fixation (7) selon l'une quelconque des revendications 11 à 14,
- comprenant un adaptateur (33) pour la fixation au bras d'entrainement (5),
- dans lequel le connecteur (15a; 15b) comporte un logement (34) de réception de l'adaptateur (33), et
- dans lequel ledit au moins un deuxième moyen de maintien (29) porté par le capot (17) est configuré pour immobiliser l'adaptateur (33) selon une direction sensiblement perpendiculaire à l'axe de coulissement (A) dans la position verrouillée du capot (17) et du connecteur (15a ; 15b).

16. Système d'essuyage de véhicule automobile comportant au moins un balai d'essuie-glace (3) et au moins un bras d'entrainement (5) du balai d'essuie-glace (3), **caractérisé en ce qu'**il comporte en outre un dispositif de fixation (7) selon l'une quelconque des revendications précédentes fixant le balai d'essuie-glace (3) au bras d'entrainement (5).

## Patentansprüche

1. Befestigungsvorrichtung (7) für die Montage eines Scheibenwischerblatts (3) eines Wischsystems (1) für Kraftfahrzeug auf einem Scheibenwischerarm (5), wobei die Befestigungsvorrichtung (7) Folgendes umfasst:
- einen Steckverbinder (15a; 15b), der eine Längshauptausdehnungsform aufweist und konfiguriert ist, um mit dem Scheibenwischerblatt (3) einerseits und dem Scheibenwischerarm (5) andererseits verbunden zu sein und Folgendes umfasst:
• mindestens ein erstes Gleitmittel (19) durch Längsverschiebung und
• mindestens ein erstes Verriegelungsmittel (23), und
- eine Haube (17), die eine Längshauptausdehnungsform aufweist und konfiguriert ist, um mit dem Steckverbinder (15a; 15b) derart zusammenzuwirken, dass das Scheibenwischerblatt (3) an dem Scheibenwischerarm (5) befestigt ist, und Folgendes umfasst:
• mindestens ein zweites Gleitmittel (21) durch Längsverschiebung, das zu dem mindestens einen ersten Gleitmittel (19) komplementär ist, und
• mindestens ein zweites Verriegelungsmittel (25), das zu dem mindestens einen ersten Verriegelungsmittel (23) komplementär ist,
**dadurch gekennzeichnet, dass**:
- die ersten Gleitmittel (19) und Verriegelungsmittel (23) aus einem einzigen Stück mit dem Steckverbinder (15a; 15b) hergestellt sind, und dass
- die zweiten Gleitmittel (21) und Verriegelungsmittel (25) aus einem einzigen Stück mit der Haube (17) hergestellt sind, und dass
- das mindestens eine zweite Gleitmittel (21) von dem mindestens einen zweiten Verriegelungsmittel (25) getrennt ist.

2. Befestigungsvorrichtung (7) nach dem vorstehenden Anspruch, wobei der Steckverbinder (15a; 15b) und die Haube (17) aus Kunststoffen hergestellt sind.

3. Befestigungsvorrichtung (7) nach einem der vorstehenden Ansprüche, wobei:
- das erste und das zweite komplementäre Gleitmittel (19, 21) jeweils von einem oberen Teil des Steckverbinders (15a; 15b) und von einem oberen Teil der Haube (17) getragen werden, und wobei
- das erste und das zweite komplementäre Verriegelungsmittel (23, 25) jeweils von entgegengesetzten Seitenflächen (154, 155) des Steckverbinders (15a; 15b) und von zwei entgegengesetzten Seitenwänden (174, 175) der Haube (17) getragen werden, indem sie sich in dem Inneren der Haube (17) erstrecken.

4. Befestigungsvorrichtung (7) nach einem der vorstehenden Ansprüche, wobei das erste und das zweite komplementäre Befestigungsmittel (23, 25) mindestens einen Haken (251) und mindestens eine dazugehörende Öffnung (231), in die sich der Haken (251) konfigurationsgemäß einfügt, umfassen.

5. Befestigungsvorrichtung (7) nach dem vorstehenden Anspruch, wobei:
- die Haube (17) mindestens zwei Aufhängpratzen (252) umfasst, die sich längs erstrecken und jeweils in einem Haken (251) enden, und
- der Steckverbinder (15a; 15b) mindestens zwei Öffnungen (231) aufweist, in die die Haken (251) konfigurationsgemäß für das Verriegeln der Haube (17) an dem Steckverbinder (15a; 15b) eingreifen.

6. Befestigungsvorrichtung (7) nach einem der vorstehenden Ansprüche, wobei die Haube (17) mindestens ein biegsames Element umfasst, das das mindestens eine zweite Verriegelungsmittel (23; 25) trägt und konfiguriert ist, um sich derart zu verformen, dass das Verriegeln oder das Entriegeln der Haube (17) und des Steckverbinders (15a; 15b) erlaubt wird.

7. Befestigungsvorrichtung (7) nach einem der vorstehenden Ansprüche, wobei die Haube (17) und der Steckverbinder (15a; 15b) konfiguriert sind, um zueinander entlang einer Gleitachse (A) zu gleiten, und wobei die ersten und zweiten komplementären Gleitmittel (19, 21) derart ausgestaltet sind, dass sie ein Abreißen der Haube (17) und/oder des Steckverbinders (15a; 15b) entlang einer Richtung senkrecht zu der Gleitachse (A) verhindern.

8. Befestigungsvorrichtung (7) nach einem der vorstehenden Ansprüche, wobei das erste und das zweite komplementäre Gleitmittel (19, 21) mindestens eine Lasche (211) und mindestens eine dazugehörende Nut (191), in der die Lasche (211) konfigurationsgemäß gleitet, umfassen.

9. Befestigungsvorrichtung (7) nach dem vorstehenden Anspruch, wobei:
- die Haube (17) mindestens zwei Laschen (211) umfasst, die sich längs erstrecken, und
- der Steckverbinder (15a; 15b) mindestens zwei dazugehörende Nuten (191) umfasst, so dass beim Zusammenfügen die Laschen (211) der Haube (17) durch Längsverschiebung in den Nuten (191) des Steckverbinders (15a; 15b) gleiten.

10. Befestigungsvorrichtung (7) nach einem der vorstehenden Ansprüche, wobei die Haube (17) einen Ausschnitt (176) für das Durchgehen des Scheibenwischerblatts (3) umfasst, wobei der Ausschnitt bevorzugt eine Breite größer als 6 mm, insbesondere in der Größenordnung von 9 mm besitzt.

11. Befestigungsvorrichtung (7) nach einem der vorstehenden Ansprüche,
- die mindestens ein erstes (27) und mindestens ein zweites (29) komplementäres Haltemittel umfasst, die jeweils von dem Steckverbinder (15a; 15b) und von der Haube (17) getragen werden,
- wobei das erste und zweite Haltemittel (27, 29) konfiguriert sind, um die Haube (17) und den Steckverbinder (15a; 15b) in einer Lieferposition ohne Zusammenwirken des ersten und zweiten Verriegelungsmittels (23, 25) zu halten.

12. Befestigungsvorrichtung (7) nach dem vorstehenden Anspruch, wobei das erste und das zweite Haltemittel (27, 29) mindestens einen Anschlag (271) und mindestens eine dazugehörende Platte (291) umfassen.

13. Befestigungsvorrichtung (7) nach dem vorstehenden Anspruch, wobei
- sich die mindestens eine Platte (291) von einer oberen Wand (171) der Haube (17) zu dem Inneren der Haube (17) erstreckt, und wobei
- der mindestens eine Anschlag (271) an der Verbindung zwischen einer oberen Fläche (151) und einer Endfläche (152, 153) des Steckverbinders (15a; 15b) eingerichtet ist.

14. Befestigungsvorrichtung (7) nach einem der Ansprüche 12 oder 13, wobei die mindestens eine Platte (291) im Wesentlichen eine "U"-Form aufweist, die zwei Schenkel (293, 294) umfasst, zwischen welchen der Anschlag (271) in der Lieferposition eingerichtet ist, so dass die Verlagerung des Steckverbinders (15a; 15b) bezüglich der Haube (17) entlang der Gleitachse (A) zwischen den zwei Schenkeln (293, 294) des "U" der mindestens einen Platte (291) beschränkt ist.

15. Befestigungsvorrichtung (7) nach einem der vorstehenden Ansprüche 11 bis 14,
- die einen Adapter (33) für die Befestigung an dem Scheibenwischerarm (5) umfasst,
- wobei der Steckverbinder (15a; 15b) eine Aufnahme (34) zum Aufnehmen des Adapters (33) umfasst, und
- wobei das mindestens eine zweite Haltemittel (29), das von der Haube (17) getragen wird, konfiguriert ist, um den Adapter (33) entlang einer Richtung, die im Wesentlichen zu der Gleitachse (A) in der verriegelten Position der Haube (17) und des Steckverbinders (15a; 15b) senkrecht ist, stillgestellt ist.

16. Kraftfahrzeug-Wischsystem, das mindestens ein Scheibenwischerblatt (3) und mindestens einen Scheibenwischerarm (5) des Scheibenwischerblatts (3) umfasst, **dadurch gekennzeichnet, dass** es außerdem eine Befestigungsvorrichtung (7) nach einem der vorstehenden Ansprüche umfasst, die das Scheibenwischerblatt (3) an dem Scheibenwischerarm (5) befestigt.

## Claims

1. Securing device (7) for fitting a windscreen wiper (3) of a motor vehicle wiping system (1) on a drive arm (5), the securing device (7) comprising:
- a connector (15a; 15b) having form of longitudinal main extension and which is configured to be connected firstly to the windscreen wiper (3) and secondly to the drive arm (5) and comprising:
• at least one first means for sliding (19) by longitudinal translation; and
• at least one first means for locking (23); and
- a cover (17) having form of longitudinal main extension and which is configured to cooperate with the connector (15a; 15b), such as to secure the windscreen wiper (3) on the drive arm (5), and comprising:
• at least one second means for sliding (21) by longitudinal translation, which is complementary with the said at least one first means for sliding (19); and
• at least one second means for locking (25), which is complementary with the said at least one first means for locking (23),
**characterised in that**:
- the first means for sliding (19) and locking (23) are produced in a single piece with the connector (15a; 15b); **in that**
- the second means for sliding (21) and locking (25) are produced in a single piece with the cover (17); and **in that**
- the said at least one second means for sliding (21) is distinct from the said at least one second means for locking (25).

2. Securing device (7) according to the preceding claim, wherein the connector (15a; 15b) and the cover (17) are made of plastic materials.

3. Securing device (7) according to one of the preceding claims, wherein:
- the first and second complementary means for sliding (19, 21) are supported respectively by an upper part of the connector (15a; 15b) and by an upper part of the cover (17), and wherein
- the first and second complementary means for locking (23, 25) are supported respectively by opposite lateral faces (154, 155) of the connector (15a; 15b), and by two opposite lateral walls (174, 175) of the cover (17), whilst extending inside the cover (17).

4. Securing device (7) according to any one of the preceding claims, wherein the first and second complementary means for locking (23, 25) comprise at least one hook (251) and at least one associated opening (231) in which the hook (251) is configured to be engaged.

5. Securing device (7) according to the preceding claim, wherein:
- the cover (17) comprises at least two coupling lugs (252) which extend longitudinally and end respectively in a hook (251), and
- the connector (15a; 15b) has at least two openings (231) in which the hooks (251) are configured to be engaged for locking of the cover (17) on the connector (15a; 15b).

6. Securing device (7) according to any one of the preceding claims, wherein the cover (17) comprises at least one flexible element which supports the said at least one second means for locking (23; 25), and is configured to be deformed such as to permit the locking or unlocking of the cover (17) and the connector (15a; 15b).

7. Securing device (7) according to any one of the preceding claims, wherein the cover (17) and the connector (15a; 15b) are configured to slide relative to one another according to an axis of sliding (*A*), and wherein the first and second complementary means for sliding (19, 21) are formed such as to prevent the cover (17) and/or the connector (15a; 15b) from being pulled off in a direction perpendicular to the axis of sliding (A).

8. Securing device (7) according to any one of the preceding claims, wherein the first and second complementary means for sliding (19, 21) comprise at least one tongue (211) and at least one associated groove (191) in which the tongue (211) is configured to slide.

9. Securing device (7) according to the preceding claim, wherein:
- the cover (17) comprises at least two tongues (211) which extend longitudinally; and
- the connector (15a; 15b) comprises at least two associated grooves (191), such that during assembly, the tongues (211) of the cover (17) slide by longitudinal translation in the grooves (191) in the connector (15a; 15b).

10. Securing device (7) according to any one of the preceding claims, wherein the cover (17) has a cut-out (176) for passage of the windscreen wiper (3), the said cut-out preferably having a width larger than 6 mm, and more particularly approximately 9 mm.

11. Securing device (7) according to any one of the preceding claims,
- comprising at least one first (27) and at least one second (29) complementary means for retention supported respectively by the connector (15a; 15b) and by the cover (17);
- the first and second means for retention (27, 29) being configured to retain the cover (17) and the connector (15a; 15b) in a delivery position, without cooperation of the first and second means for locking (23, 25).

12. Securing device (7) according to the preceding claim, wherein the first and second means for retention (27, 29) comprise at least one stop (271) and at least one associated plate (291).

13. Securing device (7) according to the preceding claim, wherein:
- the said at least one plate (291) extends from an upper wall (171) of the cover (17) towards the inside of the cover (17), and wherein
- the said at least one stop (271) is arranged at the junction between an upper face (151) and an end face (152, 153) of the connector (15a; 15b).

14. Securing device (7) according to one of claims 12 or 13, wherein the said at least one plate (291) has a form substantially of a "U", comprising two branches (293, 294) between which the stop (271) is arranged in the delivery position, such that the displacement of the connector (15a; 15b) relative to the cover (17) according to the axis of sliding (A) is limited between the two branches (293, 294) of the "U" of the said at least one plate (291).

15. Securing device (7) according to any one of claims 11 to 14:
- comprising an adapter (33) for securing on the drive arm (5),
- wherein the connector (15a; 15b) comprises a receptacle (34) for receipt of the adapter (33), and
- wherein the said at least one second means for retention (29) supported by the cover (17) is configured to immobilise the adapter (33) in a direction substantially perpendicular to the axis of sliding (A), in the locked position of the cover (17) and the connector (15a; 15b).

16. Wiping system for a motor vehicle, comprising at least one windscreen wiper (3) and at least one arm (5) to drive the windscreen wiper (3), **characterised in that** it additionally comprises a securing device (7) according to any one of the preceding claims, securing the windscreen wiper (3) on the drive arm (5).
